# EUROPEAN PATENT SPECIFICATION

(11) **EP 1 004 638 B1**
(45) Date of publication and mention of the grant of the patent: **10.11.2004**
(21) Application number: 99123497.2
(22) Date of filing: 25.11.1999
(51) Int. Cl.: C09D 5/02, C09D 7/14, C09D 5/29

(54) **Aqueous-phase painting product, production process thereof and kit usable in this process**
Wässriges Anstrichmittel, Verfahren zu seiner Herstellung und Kit zur Verwendung in diesem Verfahren
Peinture à base d'eau, son procédé de préparation et système utilisable dans ce procédé

(30) Priority: 27.11.1998 IT TO980997
(43) Date of publication of application: 31.05.2000
(60) Divisional application: 04019376.5
(73) Proprietor: Candis S.r.l., 10123 Torino (IT)
(72) Inventor: Gilli, Alberto, 10020 Andezeno (Torino) (IT)
(74) Representative: Buzzi, Franco

(56) References cited:
- EP-A- 0 505 664
- EP-A- 0 554 225

## Description

The present invention relates to an aqueous phase paint product, process for its production and equipment usable in such a process.

Paint products are known which allow multi-coloured or flecked wall coatings to be obtained called "Venetian stucco", "lime finish" " false marble" and the like. Such known products have a composition based essentially on slaked lime.

In order for these known products, once applied, to produce the desired aesthetic effect, the surface to be painted must be perfectly prepared and the product must be applied in several accurately superimposed coats one over the other with a possible final wax finishing. The procedure for application of known products is thus lengthy and complex.

For the purpose of overcoming this disadvantage, the present invention provides a paint product as set out in Claim 1 appended hereto, obtainable upon mixture of a coloured base with a neutral base which is in turn obtainable from mixture of a first solution with a second solution so as to give an intermediate product, and subsequent mixture of this latter with a third solution.

The neutral base of the paint product of the invention contains white monochromatic flocculi in aqueous solution which confer on the final decoration white flecking and shadows, thus making it assume an antique and non-uniform aspect.

The mixture of the neutral base with one or more coloured bases, moreover, allows the final paint product - which is easily applicable in a single coat by brush and then smoothed with a spatula - to assume the desired coloured speckling.

This easy applicability is due to the fact that the flocculi present in the neutral base are rather fragile so as not to streak the final decoration when this is smoothed with the spatula, but not so fragile as completely to disappear from the decoration when stressed by shear forces. In particular such white flocculi have the property of gradually breaking up when stressed by the spatula, in such a way as to create a graduation in the final colour given by the mixture between the white of the neutral base and the colour of the coloured base.

Preferably, the first solution comprises at least the following ingredients expressed in parts by weight - as also, in the absence of indication otherwise, in all the other formulations recorded:

| | |
|---|---|
| non-ionic colloid | from 0.5 to 13 |
| anti-foaming agent | from 0.1 to 2 |
| bactericide | from 0.07 to 1.5 |
| white pigment | from 0.5 to 25 |
| calcium carbonate | from 1 to 5 |
| ethylene glycol | from 0.5 to 7 |
| water | q.s. to 100 parts by weight |

Colloids which are soluble, but not ionisable in water are preferred as non-ionic colloid, and are of glycoside type, called "galactomannans".

The anti-foaming agent can be, for example, chosen from mineral paraffin oils in combination with polyalkoxyethers or emulsions of silicone polymers.

Preferably a mixture of isomers of isothiazolinone is used as bactericide.

Titanium dioxide dispersed at high speed in an aqueous medium is preferably used as the pigment, having the function of colouring the flocculi white.

The calcium carbonate has the function of creating a surface porosity in the flocculi, which allows them to remain soft but consistent.

The ethylene glycol serves to improve the spatulability of the final paint product, increasing the working time.

The first solution is preferably prepared in a receptacle provided with discharge valves and a dispersion device including a blade or helical rotor capable of translation in a vertical direction with a reciprocating action as well as capable of rotation.

The necessary water is introduced into the receptacle first, then the colloid which is dispersed at mid to high speed of the rotor (about 800-1000 rpm) to obtain the complete dissolution thereof.

The anti-foaming agent, the bactericide, and the white pigment in aqueous dispersion are added, and subsequently, the calcium carbonate and ethylene glycol, causing all these to disperse at high speed (about 1500 rpm) for some minutes and then homogenising at low speed (about 200-300 rpm). The preparation of the first solution is thus complete.

The second solution preferably comprises at least the following ingredients:

| | |
|---|---|
| anti-foaming agent | from 0.1 to 3 |
| bactericide | from 0.05 to 2 |
| thickener | from 0.9 to 3 |
| sodium borate | from 0.4 to 8 |
| silicate of sodium, lithium & magnesium | from 1 to 10 |
| hydrated silicon dioxide | from 0.7 to 3.5 |
| water | q.s. to 100 parts by weight |

A non-ionic hydrophobically modified hydroxyethylcellulose polymer is preferably used as the thickener.

The sodium borate, which is the preferred compound among the various boron compounds usable for this purpose, is the agent which triggers the reaction between the first and second solution, causing the formation of the flocculi.

The silicate of sodium, lithium and magnesium and the hydrated silicon dioxide give the flocculi the correct opacity and allow them, in the finished product, to slip fluidly under the action of the brush and on the other hand to slip less freely under the action of the spatula.

The second solution can be prepared with equipment similar to that usable for the preparation of the first solution. First, the water is introduced into the receptacle and then the thickening agent, making the rotor turn at mid to low speed (about 300-350 rpm) then the sodium borate, the bactericide and the anti-foaming agent are added in succession.

Then a dispersion at mid to low rotation speed (about 300-400 rpm) is effected for a time sufficient for the action of the thickener to become manifest and the solution to become homogeneous with various solublised components.

Finally, the silicate of sodium, lithium and magnesium and the silicon dioxide are added with the agitation being taken to mid-high speed (about 800-1000 rpm) until dispersion is complete, and then homogenising at low speed (200-300 rpm). The preparation of the second solution is thus complete.

The third solution preferably comprises of at least the following ingredients:

| | |
|---|---|
| sodium acetate | from 0.2 to 6 |
| calcium silicate | from 0.8 to 20 |
| bactericide | from 0.06 to 3 |
| anti-foaming agent | from 0.15 to 2.5 |
| thickener/anti-pouring | from 0.3 to 3.5 |
| polymer dispersed in water | from 35 to 75 |
| coalescing agent | from 0.3 to 7 |
| opacifier | from 0.35 to 15 |
| sodium benzoate | from 0.100 to 1.5 |
| glass balls | from 0.05 to 5.5 |
| water | q.s. to 100 parts by weight |

An aqueous polyurethane solution is preferably used as the thickener/anti-pouring.

The dispersed polymer is, for example, in the form of an aqueous dispersion of about 50% of a copolymer based on butyl and styrene acrylates or an acrylic polymer.

Trimethylpentadiol diisobutyrate is preferably used as the coalescing agent.

Amorphous synthetic silica is preferably used as opacifier.

The balls are preferably hollow, borosilicate glass and have very small dimensions, for example up to 6 µm in diameter. Being of amorphous material they contribute to the slip of the final paint product under the action of the brush and its resistance to mechanical stresses during the application, as well as increasing the washability and inalterability of the painted surface.

The third solution can also be prepared utilising similar equipment to that described previously. In this case, too, the water is first introduced into the receptacle, to which the sodium benzoate, the sodium acetate, the bactericide, the anti-foaming agent and coalescing agent are subsequently added, mixing at low speed (200-300 rpm) until all the ingredients are dissolved.

Subsequently the polymer dispersed in water is introduced into the receptacle, making the rotor turn for a few minutes and then the thickener/anti-pouring, calcium silicate, the opacifier and the hollow glass balls mixing at mid-high speed (800-1000 rpm) until obtaining a homogeneous solution. The preparation of the third solution is thus complete.

To produce the neutral base starting from the above described solutions, the first and second solutions are first mixed under agitation obtaining an intermediate product including white flocculi.

The intermediate product thus obtained is subsequently mixed under slow agitation (about 200-300 rpm) with the third solution obtaining the neutral base in which the white flocculi have been stabilised.

Preferably, to obtain 100 parts by weight of a neutral base, 4-35 parts by weight of the first solution are mixed with 6-53 parts by weight of the second solution and the intermediate product thus obtained is mixed with 10-55 parts by weight of the third solution.

Preferably the coloured base comprises at least the following ingredients:

| | |
|---|---|
| polymer dispersed in water | from 5 to 40 |
| preservative | from 0.1 to 3 |
| anti-foaming agent | from 0.3 to 2 |
| coalescing agent | from 0.8 to 7 |
| glycol | from 1 to 10 |
| thickener | from 0.3 to 2 |
| | |
| opacifier | from 1.2 to 5 |
| structuring additive | from 0.8 to 3 |
| pigment | from 1.2 to 25 |
| anti-mildew agent | from 0.1 to 2 |
| wetting agent | from 0.1 to 2.5 |
| dispersant | from 0.1 to 2.5 |
| water | q.s. to 100 parts by weight |

The dispersant may, for example, be chosen from the group comprising ammonium salts of a carboxylic acid, linear acrylic polymers, aminomethyl-propynol, sodium salts of polycarboxylic acids and their mixtures.

The wetting agent may, for example, be chosen from the group comprising polyglycol esters of triglyceride, lecithin of soya in water-dispersible form, solutions of a polycarboxylic acid with a silicone polymer, ammoniac salts of a polyacrylic acid of low molecular weight, solutions of an alkylammonium salt of a polyfunctional polymer and their mixtures.

The dispersing agent and the wetting agent cause perfect intermixability of the coloured base with the neutral base, making their mixing possible without the application of high shear forces and needing only simple, possibly manual, agitation. Moreover, they improve the applicability of the final paint product, encouraging perfect wettability of the substrate thus facilitating the task of the applicator.

The thickening agent may, for example, be chosen from the group comprising methyl hydroxyethylcellulose, sodium carboxymethylcellulose, methyl hydroxypropylcellulose, hydroxypropylcellulose, methylcellulose and their mixtures.

The anti-foaming agent may, for example, be chosen for the group comprising paraffin mineral oils in combination with polysiloxane polyethers - hydrophobic copolymers, emulsions of a hydrophobic polyether - polysiloxane copolymer, polyalkoxyethers modified in paraffin oil, emulsions of modified polysiloxane, mixtures of alkylbenzenes, metallic soaps, surfactants and esters and their mixtures.

As preservative it is possible to use, for example, a preservative chosen from the group comprising solutions of derivatives of isothiazolinone,12-hydroxy-5, 8,11-trioxydodecane, 1,3-bis(hydroxymethyl)urea, 1,6-dihydroxy-2, 5-dioxyhexane, derivatives of isothiazoline chlorate, mixtures of N-O formals and N-S cyclic ethers, synergistic preparations of mixtures of 1,2-benzoisothiazoline-3-one, aliphatic hemiacetals and isothiazolinone and mixtures thereof.

The opacifying agent may, for example, be chosen from the group constituted by aqueous emulsions based on high-density synthetic wax, synthetic silica, magnesium silicate and their mixtures.

As coalescing agent it is possible to utilise, for example, a coalescent chosen from the group constituted by trimethylpentadiol diisobutyrate, the 2-butoxyethyl ether of acetic acid, 2-butoxyethanol, 2-(2-butoxyethoxy)ethanol, the 2-(2-butoxyethyoxy) ethyl ether of acetic acid and their mixtures.

The polymer dispersed in water is preferably a styrol-acrylic copolymer or acrylic polymer.

The anti-mildew additive may, for example, be chosen from the group constituted by cyclic ethers and N-formal compounds, synergystic combinations of N, S-cyclic ethers, dithiocarbarmates, tributyltin esters, water insoluble derivatives of isothiazolinone and their mixtures.

The structuring additive may, for example, be chosen from the group constituted by acrylic copolymers in aqueous dispersion of low viscosity and polyurethane solutions in aqueous mixture, these latter being the preferred additives.

The glycol, advantageously ethyl or propyl, has the function of retarding filming.

The pigments used may be both organic and inorganic, with high resistance to light, thermal stability and compatibility with the other ingredients.

By way of example one can use as yellow pigment, azo yellow or yellow iron oxide; as blue pigment, the blue of alpha stable phthalocyanine or of sodium aluminium silicate; as violet pigment, dioxazine; as green pigment, phthalocyanine; as red pigment, red iron oxide or azo red; as white pigment, titanium dioxide; and as black pigment, amorphous carbon or iron oxides. Some of these pigments are available on the market in a preliminary dispersed form, whilst other are provided in solid form as micropowders.

Each coloured base can be prepared by pouring water into the steel receptacle which is positioned below a so-called "cowless" rotor provided with means for speed variation.

Under agitation at low speed (about 200 rpm) the anti-foaming agent, the preservative, the thickener, the wetting agent and the dispersant are added until the various components are thickened, and then the opacifier and the pigment.

If this latter is already available in pre-dispersed form it is added by operating at mid to low speed (200-400 rpm) for about 5 minutes; if on the other hand, it is available in solid form, for example, as a micropowder, it is added by operating at high speed (about 1500 rpm) for about 20 to 30 minutes.

At the end of this operation the polymer dispersed in water, the coalescent, the propylene glycol, the structuring additive and the anti-mildew agent are added, thus completing the preparation of the coloured base.

To obtain the final paint product it is sufficient to mix the neutral base with one or more of the coloured bases chosen on the basis of the chromatic tone which it is intended to achieve. Preferably, to obtain 100 parts of weight of paint product, 85 to 99.5 parts by weight of the neutral base are mixed with from 15 to 0.5 parts by weight of coloured base or bases.

This mixing can be achieved by the producer, by any operator involved in the distribution chain of the paint product, or by the final user. Both the neutral base and the coloured bases may in fact be preserved substantially indefinitely with their characteristics being maintained unchanged.

In this respect, a further object of the present invention is constituted by a kit for the production of the paint product of the invention, comprising the neutral base and separately from this, a plurality of coloured bases differing from one another by the nature of the pigment.

With this kit it is possible to obtain a practically infinite range of colours of the final paint product by suitably mixing the neutral base with small quantities of one or more coloured bases.

In this way it is not necessary to have to store huge quantities of a large number of finished paint products of different colours, whilst at the same time having the possibility of providing a very wide range of colours of the final product, with evident advantages of a financial and commercial nature.

The application of the paint product of the invention is, as already indicated, very simple and does not require any particular precautions or care so that even a non-professional operator is able to perform them, obtaining an excellent final result.

The surface to be decorated is first prepared with a conventional base coat, and then the paint product of the invention is applied with a brush, preferably having natural white bristles.

Finally, some minutes after the application, the painted surface is preferably smoothed with a spatula.

Because of this smoothing, in fact, after drying there is obtained a coat which is not rough and is free from protuberances and agglomerations. Moreover, in the course of this operation, it is possible to displace the monochromatic white flocculi regrouping them in spots or streaks which animate the design and lead to the creation of more or less clear zones depending on the quantity of coloured base mixed with the white flocculi of the neutral base which are broken up in differentiated manner.

A spatula, for example usable to effect the smoothing, is formed by a U-shape frame the ends of the arms of which are, respectively, fixed to plastic blades of different lengths, for brevity called the long blade and the short blade.

The arms of the frame can assume a first configuration in which they are close to one another and fixed and a second configuration in which one of the arms, after having performed a rotation of about 360°, is adjacent the opposite side of the other arm, without being fixed to it, in such a way that the two blades are substantially independent of one another.

The blades of the spatula can be used in any of the above mentioned configuration depending on the specific requirements of use.

For example, if it is desired to show up the white streaks given by the flocculi the short blade is utilised with the spatula in the second configuration. In this way the flocculi are pressed and dilated more easily so as to appear more prominently in the final decoration.
On the other hand, if it is desired to have a lesser final white effect the long blade will be used, again with spatula in the second configuration, causing less drag and breakage of the flocculi.

By utilising the spatula instead in the first configuration, the pressure exerted by the applicator on the frame is mediated by one blade on the other fixed to it so that the paint product will have a softer effect with the colour of the coloured base and the white flocculi amalgamating in such a way as to form a less aggressive and contrasting decoration.

In summary, therefore, by varying the configuration of the spatula it is possible to vary in some way the decoration obtained, thus allowing the applicator to express his or her creativity.

There are now provided, by way non-limitative example, some examples of formulations of neutral and coloured bases usable for the preparation of the paint product of the invention.

### EXAMPLE I - NEUTRAL BASE

### First Solution

| | |
|---|---|
| water | 92.400 |
| non-ionic colloid (galactomannan) | 1.000 |
| anti-foaming agent (emulsion of silicon polymers) | 0.500 |
| bactericide (mixture of isomers of isothyazolinone) | 0.400 |
| white pigment (pre-dispersed TiO2) | 4.000 |
| calcium carbonate (CaCO₃) | 1.100 |
| ethylene glycol (mono) | 0.600 |
| total parts by weight | 100.000 |

### Second Solution

| | |
|---|---|
| water | 95.400 |
| anti-foaming agent (emulsion of silicon polymers) | 0.300 |
| bactericide (mixture of isomers of isothiazolinone) | 0.400 |
| thickener (hydroxyethyl cellulose) | 1.000 |
| sodium borate | 1.000 |
| sodium, lithium & magnesium silicate | 1.100 |
| hydrated silicon dioxide | 0.800 |
| total parts by weight | 100.000 |

### Third Solution

| | |
|---|---|
| Water | 18.200 |
| sodium acetate | 0.300 |
| calcium silicate | 0.900 |
| bactericide (mixture of isomers of isothiazolinone) | 0.400 |
| anti-foaming agent (emulsion of silicon polymers) | 0.400 |
| thickener/anti-pouring (polyurethane solutions in aqueous mixture) | 2.000 |
| polymer dispersed in water (aqueous dispersion of butyl & styrene acrylate) | 70.000 |
| coalescent (trimethylpentadiol diisobutyrate) | 3.000 |
| opacifier (amorphous synthetic silica) | 4.000 |
| sodium benzoate | 0.300 |
| hollow balls of borosilicate glass | 0.500 |
| total parts by weight | 100.000 |

### EXAMPLE II - YELLOW COLOURED BASE

| | |
|---|---|
| water | 45.380 |
| polymer dispersed in water ( styrol-acrylic copolymer in aqueous emulsion) | 31.000 |
| bactericide (mixture of isothiazolinone isomers) | 0.660 |
| anti-foaming agent (emulsions of silicone polymers) | 0.430 |
| coalescent (trimethylpentadiol dissobutyrate) | 1.500 |
| propylene glycol | 4.750 |
| thickener (methylcellulose) | 0.350 |
| opacifier (synthetic silica) | 2.150 |
| structuring additive (polyurethane solution in aqueous mixture) | 0.880 |
| pigment (azoic yellow) | 12.000 |
| anti-mildew agent (water-insoluble derivatives of isothiazolinone) | 0.500 |
| wetting agent (polyglycol esters of triglyceride) | 0.200 |
| dispersant (ammonium salts of a polyacrylic acid) | 0.200 |
| total parts by weight | 100.000 |

### EXAMPLE III - RED COLOURED BASE

| | |
|---|---|
| water | 45.380 |
| polymer dispersed in water (styrol-acrylic copolymer in aqueous emulsion) | 31.000 |
| bactericide (mixture of isothiazolinone isomers) | 0.660 |
| anti-foaming agent (emulsions of silicone polymers) | 0.430 |
| coalescent (trimethylpentadiol dissobutyrate) | 1.500 |
| propylene glycol | 4.750 |
| thickener (methyl cellulose) | 0.350 |
| opacifier (synthetic silica) | 2.150 |
| structuring additive (polyurethane solution in aqueous mixture) | 0.880 |
| pigment (red iron oxide) | 12.000 |
| anti-mildew agent (water-insoluble derivatives of isothiazolinone) | 0.500 |
| wetting agent (polyglycol esters of triglyceride) | 0.200 |
| dispersant (ammonium salts of a polyacrylic acid) | 0.200 |
| total parts by weight | 100.000 |

Naturally, the principle of the invention remaining the same, the details of construction and the embodiments can be widely varied with respect to what has been described purely by way of non-limitative example, without by this departing from its ambit.

## Claims

1. An aqueous phase paint product obtainable from the mixture of a neutral base with a coloured base, the said coloured base comprising at least the following ingredients in the quantities indicated in parts by weight:
| | | |
|---|---|---|
| polymer dispersed in water | from 5 | to 40 |
| coalescent | from 0.8 | to 7 |
| thickener | from 0.3 | to 2 |
| structuring additive | from 0.8 | to 3 |
| pigment | from 1.2 | to 25 |
| water | q.s. to | 100 parts |
the said neutral base being obtainable by mixing a first solution with a second solution so as to obtain an intermediate product, and subsequent mixing of the said intermediate product with a third solution, the said first solution comprising at least the following ingredients in quantities indicated in parts by weight:
| | | |
|---|---|---|
| non-ionic colloid | from 0.5 | to 13 |
| white pigment | from 0.5 | to 25 |
| calcium carbonate | from 1.0 | to 5 |
| ethylene glycol | from 0.5 | to 7 |
| water | q.s to | 100 parts |
the said second solution comprising at least the following ingredients in quantities indicated by weight :
| | | |
|---|---|---|
| thickener | from 0.9 | to 3 |
| boron compound | from 0.4 | to 8 |
| sodium, lithium & magnesium silicate | from 1.0 | to 10 |
| water | q.s. to | 100 parts |
the said third solution comprising at least the following ingredients in quantities indicated by weight:
| | | |
|---|---|---|
| sodium acetate | from 0.2 | to 6 |
| calcium silicate | from 0.8 | to 20 |
| thickener/anti-pouring | from 0.3 | to 3.5 |
| polymer dispersed in water | from 35 | to 75 |
| coalescent | from 0.3 | to 7 |
| glass balls | from 0.05 | to 5.5 |
| water | q.s. to | 100 parts |

2. A paint product according to Claim 1, in which the said coloured base further contains at least one of the following ingredients in the quantities indicated in parts by weight:
| | | |
|---|---|---|
| glycol | from 1.0 | to 10 |
| preservative | from 0.1 | to 3 |
| anti-foaming agent | from 0.3 | to 2 |
| anti-mildew | from 0.1 | to 2 |
| opaficier | from 1.2 | to 5 |
| wetting agent | from 0.1 | to 2.5 |
| dispersant | from 0.1 | to 2.5 |

3. A paint product according to any preceding Claim, in which the said first solution further contains at least one of the following ingredients in the indicated quantities in parts by weight:
| | | |
|---|---|---|
| anti-foaming agent | from 0.1 | to 2 |
| bactericide | from 0.07 | to 1.5 |

4. A paint product according to any preceding Claim, in which the said second solution further contains at least one of the following ingredients in the quantities indicated in parts by weight:
| | | |
|---|---|---|
| anti-foaming agent | from 0.1 | to 3 |
| bactericide | from 0.05 | to 2 |
| hydrated silicon dioxide | from 0.7 | to 3.5 |

5. A paint product according to any preceding Claim, in which the said boron compound present in the second solution is sodium borate.

6. A paint product according to any preceding Claim, in which the said third solution further contains at least one of the following ingredients in the indicated quantities in parts by weight:
| | | |
|---|---|---|
| bactericide | from 0.06 | to 3 |
| anti-foaming agent | from 0.15 | to 2.5 |
| opacifier | from 0.35 | to 15 |
| sodium benzoate | from 0.1 | to 1.5 |

7. A paint product according to any proceeding Claim, in which the said balls of the third solution are hollow balls of borosilicate glass.

8. A process for the production of a paint product according to any preceding Claim, comprising mixing from 4 to 35 parts by weight of the first solution with from 6 to 53 parts by weight of the second solution and subsequent mixing of the intermediate product thus obtained with 10 to 55 parts by weight of the third solution to obtain 100 parts by weight of the neutral base.

9. A process for the production of a paint product according to Claim 8, comprising mixing from 85 to 99.5 parts by weight of the neutral base with from 15 to 0.5 parts by weight of the coloured base.

10. Kit for the production of a paint product according to any of Claims 1 to 7, comprising the said neutral base and, separately from this, a plurality of coloured bases different from one another by the nature of the pigment.

11. Kit according to Claim 10, further comprising a spatula for the application of the paint product obtainable from mixing the neutral base with one or more coloured bases.

12. Kit according to Claim 11, in which the said spatula is made from a plastic material.

13. Kit according to any of the preceding Claims 11 and 12 further comprising a brush.

## Patentansprüche

1. Anstrichfarbenprodukt mit wässriger Phase, erhältlich aus dem Gemisch einer neutralen Basis mit einer Farbbasis, wobei die Farbbasis mindestens die folgenden Zusätze in den in Gewichtsteilen angegebenen Mengen umfasst:
| | | |
|---|---|---|
| Polymer, dispergiert in Wasser | 5 | bis 40 |
| Koaleszenzmittel | 0,8 | bis 7 |
| Verdickungsmittel | 0,3 | bis 2 |
| Strukturzusatz | 0,8 | bis 3 |
| Pigment | 1,2 | bis 25 |
| Wasser | q.s. auf | 100 Teile |
wobei die neutrale Basis durch Mischen einer ersten Lösung mit einer zweiten Lösung unter Erhalt eines Zwischenprodukts und anschließendes Mischen des Zwischenprodukts mit einer dritten Lösung erhältlich ist, wobei die erste Lösung mindestens die folgenden Zusätze in den in Gewichtsteilen angegebenen Mengen umfasst:
| | | |
|---|---|---|
| Nichtionisches Kolloid | 0,5 | bis 13 |
| Weißpigment | 0,5 | Bis25 |
| Calciumcarbonat | 1,0 | bis 5 |
| Ethylenglycol | 0,5 | bis 7 |
| Wasser | q.s. auf | 100 Teile |
wobei die zweite Lösung mindestens die folgenden Zusätze in den in Gewicht angegebenen Mengen umfasst:
| | | |
|---|---|---|
| Verdickungsmittel | 0,9 | bis 3 |
| Borverbindung | 0,4 | bis 8 |
| Natrium-, Lithium- und Magnesiumsilicat | 1,0 | bis 10 |
| Wasser | q.s. auf | 100 Teile |
wobei die dritte Lösung mindestens die folgenden Zusätze in den in Gewicht angegebenen Mengen umfasst:
| | | |
|---|---|---|
| Natriumacetat | 0,2 | bis 6 |
| Calciumsilicat | 0,8 | bis 20 |
| Verdickungsmittel/Antigießmittel | 0,3 | bis 3,5 |
| Polymer, dispergiert in Wasser | 35 | bis 75 |
| Koaleszenzmittel | 0,3 | bis 7 |
| Glaskugeln | 0,05 | bis 5,5 |
| Wasser | q.s. auf | 100 Teile |

2. Anstrichfarbenprodukt nach Anspruch 1, wobei die Farbbasis ferner mindestens einen der folgenden Zusätze in den in Gewichtsteilen angegebenen Mengen enthält:
| | | |
|---|---|---|
| Glycol | 1,0 | bis 10 |
| Konservierungsmittel | 0,1 | bis 3 |
| Antischäumungsmittel | 0,3 | bis 2 |
| Antischimmelmittel | 0,1 | bis 2 |
| Trübungsmittel | 1,2 | bis 5 |
| Netzmittel | 0,1 | bis 2,5 |
| Dispersionsmittel | 0,1 | bis 2,5 |

3. Anstrichfarbenprodukt nach einem der vorangehenden Ansprüche, wobei die erste Lösung mindestens einen der folgenden Zusätze in den in Gewichtsteilen angegebenen Mengen enthält:
| | | |
|---|---|---|
| Antischäumungsmittel | 0,1 | bis 2 |
| Bakterizid | 0,07 | bis 1,5 |

4. Anstrichfarbenprodukt nach einem der vorangehenden Ansprüche, wobei die zweite Lösung mindestens einen der folgenden Zusätze in den in Gewichtsteilen angegebenen Mengen enthält:
| | | |
|---|---|---|
| Antischäumungsmittel | 0,1 | bis 3 |
| Bakterizid | 0,05 | bis 2 |
| Kieselsäure | 0,7 | bis 3,5 |

5. Anstrichfarbenprodukt nach einem der vorangehenden Ansprüche, wobei es sich bei der in der zweiten Lösung vorliegenden Borverbindung um Natriumborat handelt.

6. Anstrichfarbenprodukt nach einem der vorangehenden Ansprüche, wobei die dritte Lösung mindestens einen der folgenden Zusätze in den in Gewichtsteilen angegebenen Mengen enthält:
| | | |
|---|---|---|
| Bakterizid | 0,06 | bis 3 |
| Antischäumungsmittel | 0,15 | bis 2,5 |
| Trübungsmittel | 0,35 | bis 15 |
| Natriumbenzoat | 0,1 | bis 1,5 |

7. Anstrichfarbenprodukt nach einem der vorangehenden Ansprüche, wobei es sich bei den Kugeln der dritten Lösung um hohle Kugeln aus Borsilicatglas handelt.

8. Verfahren zur Herstellung eines Anstrichfarbenprodukts nach einem der vorangehenden Ansprüche, umfassend Mischen von 4 bis 35 Gewichtsteilen der ersten Lösung mit 6 bis 53 Gewichtsteilen der zweiten Lösung und anschließendes Mischen des so erhaltenen Zwischenprodukts mit 10 bis 55 Gewichtsteilen der dritten Lösung zum Erhalt von 100 Gewichtsteilen der neutralen Basis.

9. Verfahren zur Herstellung eines Anstrichfarbenprodukts nach Anspruch 8, umfassend Mischen von 85 bis 99,5 Gewichtsteilen der neutralen Basis mit 15 bis 0,5 Gewichtsteilen der Farbbasis.

10. Bausatz zur Herstellung eines Anstrichfarbenprodukts nach einem der Ansprüche 1 bis 7, umfassend die neutrale Basis und getrennt davon mehrere durch die Pigmentnatur voneinander verschiedenen Farbbasen.

11. Bausatz nach Anspruch 10, ferner umfassend einen Spachtel zum Auftragen des aus dem Mischen der neutralen Basis mit einer oder mehreren Farbbasen erhältlichen Anstrichfarbenprodukts.

12. Bausatz nach Anspruch 11, wobei der Spachtel aus einem Kunststoffmaterial hergestellt ist.

13. Bausatz nach einem der vorangehenden Ansprüche 11 und 12, ferner umfassend eine Bürste.

## Revendications

1. Peinture en phase aqueuse pouvant être obtenue à partir du mélange d'une base neutre avec une base colorée, ladite base colorée comprenant au moins les ingrédients suivants dans les quantités indiquées en parties en poids :
| | | |
|---|---|---|
| Polymère dispersé dans de l'eau | de 5 | à 40 |
| Agent de coalescence | de 0,8 | à 7 |
| Agent épaississant | de 0,3 | à 2 |
| Additif structurant | de 0,8 | à 3 |
| Pigment | de 1,2 | à 25 |
| Eau | q.s à | 100 parties |
ladite base neutre pouvant être obtenue en mélangeant une première solution avec une deuxième solution de sorte à obtenir un produit intermédiaire, et en mélangeant ultérieurement ledit produit intermédiaire avec une troisième solution, ladite première solution comprenant au moins les ingrédients suivants dans les quantités indiquées en parties en poids :
| | | |
|---|---|---|
| Colloïde non ionique | de 0,5 | à 13 |
| Pigment blanc | de 0,5 | à 25 |
| Carbonate de calcium | de 1,0 | à 5 |
| Ethylène glycol | de 0,5 | à 7 |
| Eau | q.s à | 100 parties |
ladite deuxième solution comprenant au moins les ingrédients suivants dans les quantités indiquées en parties en poids :
| | | |
|---|---|---|
| Agent épaississant | de 0,9 | à 3 |
| Composé de bore | de 0,4 | à 8 |
| Silicate de magnésium, de lithium et de sodium | de 1,0 | à 10 |
| Eau | q.s à | 100 parties |
ladite troisième solution comprenant au moins les ingrédients suivants dans les quantités indiquées en parties en poids :
| | | |
|---|---|---|
| Acétate de sodium | de 0,2 | à 6 |
| Silicate de calcium | de 0,8 | à 20 |
| Agent épaississant/agent anti-coulée. | de 0,3 | à 3,5 |
| Polymère dispersé dans de l'eau | de 35 | à 75 |
| Agent de coalescence | de 0,3 | à 7 |
| Billes de verre | de 0,05 | à 5,5 |
| Eau | q.s à | 100 parties |

2. Peinture selon la revendication 1, dans laquelle ladite base colorée comprend en outre au moins l'un des ingrédients suivants dans les quantités indiquées en parties en poids :
| | | |
|---|---|---|
| Glycol | de 1,0 | à 10 |
| Conservateur | de 0,1 | à 3 |
| Agent anti-mousse | de 0,3 | à 2 |
| Agent anti-moisissure | de 0,1 | à 2 |
| Opacifiant | de 1,2 | à 5 |
| Agent mouillant | de 0,1 | à 2,5 |
| Dispersant | de 0,1 | à 2,5 |

3. Peinture selon l'une quelconque des revendications précédentes, dans laquelle ladite première solution comprend en outre au moins un des ingrédients suivants dans les quantités indiquées en parties en poids :
| | | |
|---|---|---|
| Agent anti-mousse | de 0,1 | à 2 |
| Bactéricide | de 0,07 | à 1,5 |

4. Peinture selon l'une quelconque des revendications précédentes, dans laquelle ladite deuxième solution comprend en outre au moins un des ingrédients suivants dans les quantités indiquées en parties en poids :
| | | |
|---|---|---|
| Agent anti-mousse | de 0,1 | à 3 |
| Bactéricide | de 0,05 | à 2 |
| Dioxyde de silicium hydraté | de 0,7 | à 3,5 |

5. Peinture selon l'une quelconque des revendications précédentes, dans laquelle ledit composé de bore présent dans la deuxième solution est le borate de sodium.

6. Peinture selon l'une quelconque des revendications précédentes, dans laquelle ladite troisième solution comprend en outre au moins un des ingrédients suivants dans les quantités indiquées en parties en poids :
| | | |
|---|---|---|
| Bactéricide | de 0,06 | à 3 |
| Agent anti-mouse | de 0,15 | à 2,5 |
| Opacifiant | de 0,35 | à 15 |
| Benzoate de sodium | de 0,1 | à 1,5 |

7. Peinture selon l'une quelconque des revendications précédentes, dans laquelle lesdites billes de la troisième solution sont des billes creuses en verre de borosilicate.

8. Procédé de production d'une peinture selon l'une quelconque des revendications précédentes, comprenant le mélange de 4 à 35 parties en poids de la première solution avec de 6 à 53 parties en poids de la deuxième solution et le mélange ultérieur du produit intermédiaire ainsi obtenu avec de 10 à 55 parties en poids de la troisième solution pour obtenir 100 parties en poids de la base neutre.

9. Procédé de production d'une peinture selon la revendication 8, comprenant le mélange de 85 à 99,5 parties en poids de la base neutre avec de 15 à 0,5 parties en poids de la base colorée.

10. Kit de production d'une peinture selon l'une quelconque des revendications 1 à 7, comprenant ladite base neutre et, séparément de celle-ci, une pluralité de bases colorées différentes les unes des autres par la nature du pigment.

11. Kit selon la revendication 10, comprenant en outre une spatule pour l'application de la peinture pouvant être obtenue à partir du mélange de la base neutre avec une ou plusieurs bases colorées.

12. Kit selon la revendication 11, dans lequel ladite spatule est réalisée à partir d'un matériau en plastique.

13. Kit selon l'une quelconque des revendications précédentes 11 et 12, comprenant en outre une brosse.
